# EUROPÄISCHE PATENTSCHRIFT

(11) **EP 2 311 655 B1**
(45) Veröffentlichungstag und Bekanntmachung des Hinweises auf die Patenterteilung: **03.07.2013**
(21) Anmeldenummer: 10177249.9
(22) Anmeldetag: 17.09.2010
(51) Int. Cl.: B60C 11/03, B60C 11/12

(54) **Laufstreifenprofil eines Fahrzeugluftreifens**
Tread profile of a vehicle tyre
Profil de bande de roulement d'une bande pneumatique de véhicule

(30) Priorität: 14.10.2009 DE 102009044242
(43) Veröffentlichungstag der Anmeldung: 20.04.2011
(73) Patentinhaber: Continental Reifen Deutschland GmbH, 30165 Hannover (DE)
(72) Erfinder: Rittweger, Stefan, 30455 Hannover (DE)
(74) Vertreter: Finger, Karsten

(56) Entgegenhaltungen:
- EP-A2- 0 917 970
- EP-A2- 1 676 695
- JP-A- 2001 063 323

## Beschreibung

Die Erfindung betrifft ein Laufstreifenprofil eines Fahrzeugluftreifens mit radial erhabenen, durch Rillen voneinander beabstandeten Profilelementen mit schmalen linien-oder nutförmigen Vertiefungen in Profilelementen, die sich jeweils durch das jeweilige Profilelement hindurch erstrecken und in das Profilelement begrenzenden Rillen münden, wobei ein oder mehrere schmale linien- oder nutförmigen Vertiefungen in radialer Richtung mit einem radial inneren Erstreckungsabschnitt der Erstreckungshöhe T₂ und einem radial äußeren Erstreckungsbereich der Erstreckungshöhe T₁ im Reifen ausgebildet sind, wobei sich der radial innere Erstreckungsabschnitt in radialer Richtung vom tiefsten Punkt des Vertiefungsgrundes bis zum radial äußeren Erstreckungsbereich und der radial äußere Erstreckungsbereich vom radial inneren Erstreckungsbereich bis zu der das Profilelement nach radial außen begrenzenden, die Bodenkontaktfläche bildenden Oberfläche erstreckt, und wobei die nutförmige Vertiefung im radial äußeren Erstreckungsbereich als Feineinschnitt mit einer Schnittbreite D und im radial inneren Erstreckungsbereich als rohrförmiger Öffnungskanal mit maximaler Öffnungsbreite B ausgebildet ist mit B ≥ (2D).

Dokument EP0917970 offenbart einen solchen Laufstreifenprofil.

Laufstreifenprofile für PKW-Reifen sind üblicherweise durch Rillen voneinander beabstandeten, radial erhabenen Profilelementen ausgebildet. Die Rillen ermöglichen dabei den Abfluss des Wassers aus dem Laufstreifenprofil. Die Profilelemente bilden mit ihren durch die Rillen gebildeten Flanken zusätzliche Griffkanten zum Griff auf nasser Oberfläche.

Bei einem Neureifen, bei dem die radial erhabenen Profilelemente noch ihre volle Profiltiefe aufweisen, bilden die Rillen ein mit ihrer über die volle Profiltiefe reichenden Rillentiefe ein großes Volumen zur Ableitung von Wasser auf. Die Profilelemente sind aufgrund ihrer vollen Profiltiefenausbildung noch flexibel. Die Profilelemente stehen bei einwirkenden Traktions- und Handlingskräften aufgrund der hierdurch bewirkten Deformation nur mit einem Teil ihrer radial nach außen wirkenden Oberfläche in vollem wirkenden Griffkontakt zur Straßenoberfläche, wodurch besonders Nassgriffeigenschaften negativ beeinflusst werden. Damit beim Neureifen Nassgriffeigenschaften nicht zu stark reduziert werden, werden die radial erhabenen Profilelemente in axialer Richtung A und in Umfangsrichtung U des Reifens relativ groß dimensioniert, um auf diese Weise eine relativ große theoretisch wirkende radial äußere Oberfläche zu erhalten, die mit der Straße in Berührkontakt kommen kann. Hierdurch wird der negative Einfluss des Verbiegens der Oberfläche in Grenzen gehalten. Zur Verbesserung der Nassgriffwirkung werden hierzu vereinzelt in die Profilelemente feine Einschnitte ausgebildet, die bei Optimierung ohne größere zusätzliche Flexibilität deutlich verbesserte Griffwirkung auf nassen Oberflächen ermöglichen.

Im Laufe des Lebenszyklus wird die Profiltiefe des Laufstreifenprofils aufgrund des Abriebs zunehmend reduziert. Die verbleibenden Profilelemente werden mit ihrer reduzierten Profiltiefe steifer, wodurch die die Profilelemente in radialer Richtung nach außen begrenzende Oberfläche geringeren Deformationen unterliegen und einen verbesserten Nassgriff ermöglichen. Allerdings nimmt mit zunehmender Lebensdauer auch das Volumen der verbleibenden Rillen im Reifenprofil ab, wodurch auch die Fähigkeit Wasser aus dem Reifenprofil abzuleiten abnimmt und die Aquaplaninggefahr steigt.

Die Ausbildung zusätzlicher Rillen im Reifenprofil ermöglicht zwar ein zusätzliches Volumen auch für den späteren Lebenszyklus und somit im späteren Lebenszyklus eine Reduzierung der Aquaplaninggefahr. Die zusätzlichen Rillen bewirken jedoch im Neureifen eine zusätzliche Reduktion der wirkenden Straßenkontaktoberfläche aufgrund des größeren Negativanteils des Profils und darüber hinaus zusätzliche Flexibilität der ohnehin bereits sehr flexiblen Profilelemente, wodurch Biegeeffekte der Profilelemente und hierdurch bedingt die mit der Straßenoberfläche in Kontakt tretenden Reifenoberfläche weiter reduziert wird. Hierdurch wird die Nassgriffeignung am Neureifen weiter reduziert. Für Nutzfahrzeugreifen wurde vereinzelt bereits vorgeschlagen, in Profilelementen Einschnitte auszubilden, die im radial äußeren Erstreckungsbereich als reiner Feineinschnitt und in ihrem radial inneren Erstreckungsbereich als Durchflusskanal ausgebildet sind. Dies ermöglicht beim Neureifenprofil eine volle wirkende Oberfläche des radial erhabenen Profilelementes mit Abfluss des Wasservolumens durch die die Profilelemente trennenden Rillen mit großem Rillenvolumen bei großer wirkender Straßenkontaktoberfläche zwischen Profilelement und Straßenoberfläche. Ab Erreichen einer bestimmten Lebensdauer ist das Profil so stark reduziert, dass der als Feineinschnitt ausgebildete radial äußere Erstreckungsbereich abgefahren ist und der radial innere als Durchflusskanal ausgebildete Erstreckungsbereich zur zusätzlichen Rille wird. Dies ermöglicht dann, dass trotz geringerer Profiltiefe über diese zusätzlich geschaffenen Rillen mit dem damit verbundenen zusätzlichen Rillenvolumen zusätzliches Wasservolumen abgeführt werden kann. Hierdurch kann die Aquaplaninggefahr auch bei abgefahrenen Reifen reduziert werden.

Allerdings wird mit dem Öffnen dieses Durchflusskanals zur Ausbildung einer Rille die radial äußere Reifenoberfläche, die durch Bodenkontakt gerade auf Nässe, Schnee oder Matsch oder sonstigen Untergrund zur Sicherstellung der Griffwirkung wichtig ist, reduziert. Die neu geschaffenen Rillen bilden mit ihren Rillenkanten zwar zusätzliche Griffkanten, allerdings nimmt diese Griffwirkung mit weiter abgefahrenem Profil zusätzlich ab. Somit unterliegen derartige Profile weiterhin mit zunehmender Lebensdauer noch Griffeinschränkungen, insbesondere auf nasser, matschiger, schneebedeckter oder mit losem Untergrund bedeckter Straßenoberfläche.

Der Erfindung liegt daher die Aufgabe zugrunde mit einfachen Mitteln ein Laufstreifenprofil zu schaffen, bei welchem trotz gutem Nass- und Trockengriff im Neuzustand auch im späteren Lebenszyklus mit durch Abrieb reduzierter Profiltiefe gute Nassgriff- und Aquaplaningeigenschaften ermöglicht werden.

Erfindungsgemäß wird die Aufgabe durch die Ausbildung eines Laufstreifenprofils eines Fahrzeugluftreifens mit radial erhabenen, durch Rillen voneinander beabstandeten Profilelementen mit schmalen linien- oder nutförmigen Vertiefungen in Profilelementen, die sich jeweils durch das jeweilige Profilelement hindurch erstrecken und in das Profilelement begrenzenden Rillen münden, wobei ein oder mehrere schmale linien- oder nutförmige Vertiefungen in radialer Richtung mit einem radial inneren Erstreckungsabschnitt einer Erstreckungshöhe T₂ und einem radial äußeren Erstreckungsbereich einer Erstreckungshöhe T₁ im Reifen ausgebildet sind, wobei sich der radial innere Erstreckungsabschnitt in radialer Richtung R vom tiefsten Punkt des Vertiefungsgrundes bis zum radial äußeren Erstreckungsbereich und der radial äußere Erstreckungsbereich vom radial inneren Erstreckungsbereich bis zu der das Profilelement nach radial außen begrenzenden, die Bodenkontaktfläche bildenden Oberfläche erstreckt, und wobei die nutförmige Vertiefung im radial äußeren Erstreckungsbereich als Feineinschnitt mit einer Schnittbreite D und im radial inneren Erstreckungsbereich als rohrförmiger Öffnungkanal mit maximaler Öffnungsbreite B ausgebildet ist mit B ≥ 2D), gemäß den Merkmalen von Anspruch 1 gelöst, bei dem an dem den rohrförmigen Öffnungskanal nach radial innen begrenzenden Vertiefungsgrund eine oder mehrere - insbesondere parallele - linienförmige radiale Erhebung(en) ausgebildet ist bzw. sind.

Durch diese Ausbildung wird ermöglicht, dass auch ein Neureifen mit durch Rillen begrenzten Profilelementen bei gutem Wasserabfluss über die Rillen und großer wirkender Straßenkontaktoberfläche über Profilelemente, gute Aquaplaning- und Griffeigenschaften auf nasser und trockener Straße aufweist. Die wirkenden Feineinschnitte ermöglichen ohne Aufweichung der Profilelemente und ohne Reduktion der mit der Straßenoberfläche in Berührung kommenden Oberfläche zusätzliche Griffkanten und optimierte Nassgriffeigenschaften. Der Öffnungskanal bewirkt ein zusätzliches Durchflussvolumen für Wasser, welches mit zunehmender Lebensdauer und reduzierter Tiefe der wirkenden Rillen ausreichend Abflussmöglichkeit zur Verfügung stellt. Sobald das Profil soweit abgefahren ist, dass der radial äußere als Feineinschnitt ausgebildete Erstreckungsbereich abgefahren und der Öffnungskanal sich unter Bildung einer weiterer Rille öffnet, wird das zur Verfügung stellende Rillenvolumen durch diese zusätzliche Rille erhöht, wodurch der Abfluss auch im abgefahrenen Zustand auf hohem Niveau ermöglicht wird. Die durch diese dann neuen Rille(n) unterteilten Profilelementabschnitte sind aufgrund der geringen noch vorhandenen Profiltiefe steif genug, um ohne Deformation einen großen Oberflächenkontakt zur Straßenoberfläche sicher zu stellen. Die durch den Öffnungskanal gebildete Rille bildet mit ihren Rillenwänden zusätzliche Griffkanten. Die linienförmigen Erhebungen im Vertiefungsgrund bewirken bereits Öffnung des Öffnungskanals mit unter Bildung einer Rille, dass Schnee, Schlamm und Matsch bei Eindringen sich zwischen linienförmiger Erhebung und Öffnungskanalwänden eingepresst werden, wodurch die Schnee-Schnee-, Schlamm-Schlamm- bzw. Matsch-Matsch-Reibung erhöht wird. Mit weiter abgefahrenen Profil kommen die linienförmigen Erhebungen beim Abrollen auch direkt in Kontakt mit Matsch, Schnee, losem Untergrund oder Nässe und entfalten hierdurch zusätzliche Griffwirkung, wodurch gerade im letzten Stadium der Lebensdauer des Reifens die Griffwirkung auf Schnee, Matsch, losem Untergrund und auf Nässe erhöht wird.

Darüber hinaus zeigt die linienförmige Erhebung auch an, wie weit das Profil bereits abgefahren ist und kann somit zusätzlich als Abriebsindikator eingesetzt werden.

Besonders vorteilhaft ist die Ausbildung eines Laufstreifenprofils gemäß den Merkmalen von Anspruch 2, bei dem die linienförmige Erhebung(en) - insbesondere geradlinig - parallel zum Verlauf des Durchfluss ermöglichenden Öffnungskanals verlaufend ausgebildet ist bzw. sind. Hierdurch kann bei einfacher Gestaltung der Vulkanisationsform das Entstehen von Verwirbelungen des durchfließenden Wassers im Profil verhindert und die Strömung verbessert werden.

Besonders vorteilhaft ist die Ausbildung eines Laufstreifenprofils gemäß den Merkmalen von Anspruch 3, bei dem die linienförmige Erhebung(en) -insbesondere geradlinig - schräg verlaufend unter Einschluss eines Schnittwinkels größer Null Grad zum Verlauf des Öffnungskanals ausgebildet ist bzw. sind. Hierdurch kann in sehr zuverlässiger Weise die Nassgriffwirkung des bis zu dem Eingriffbereich der linienförmigen Erhebungen mit der Straßenoberfläche abgeriebenen Profil optimiert - beispielsweise für optimalen Griff in Abriebrichtung - über den Schnittwinkel individuell eingestellt werden. Das wirkende Kraftverhältnis der in Quer- und Längsrichtung übertragenen Kräfte kann individuell durch individuelle Einstellung des Schnittwinkels entsprechend den Anforderungen an den Reifen eingestellt werden.

Besonders vorteilhaft ist die Ausbildung eines Laufstreifenprofils gemäß den Merkmalen von Anspruch 4, bei dem die linienförmige Erhebung(en) - insbesondere geradlinig - parallel verlaufend zum Verlauf des Feineinschnittes in der das Profilelement nach radial außen begrenzenden Oberfläche ausgebildet ist bzw. sind. Hierdurch kann bei einfacher Gestaltung der Vulkanisationsform das Entstehen von Verwirbelungen des durchfließenden Wassers im Profil verhindert und die Strömung verbessert werden.

Besonders vorteilhaft ist die Ausbildung eines Laufstreifenprofils gemäß den Merkmalen von Anspruch 5, bei dem die linienförmige Erhebung(en) -insbesondere geradlinig - schräg verlaufend unter Einschluss eines Schnittwinkels größer Null Grad zum Verlauf des Feineinschnittes in der das Profilelement nach radial außen begrenzenden Oberfläche ausgebildet ist bzw. sind.

Besonders vorteilhaft ist die Ausbildung eines Laufstreifenprofils gemäß den Merkmalen von Anspruch 6, wobei der den rohrförmigen Durchfluss ermöglichenden Öffnungskanal nach radial innen begrenzende Vertiefungsgrund zwischen den beiden Einmündungspositionen in die begrenzenden Rillen mit einer Erstreckungslänge L ausgebildet ist, wobei der Öffnungskanal wenigstens im Bereich einer Einmündung - insbesondere beider Einmündungen - ausgehend von der Einmündungsposition mit einem Erstreckungsabschnitt der Erstreckungslänge a ausgebildet ist, in welchem eine um eine in radialer Richtung R aus dem Vertiefungsgrund um eine Höhe H angehobene stegförmige, quer zur Erstreckungsrichtung des Öffnungskanals erstreckte Anbindung der beiden den Öffnungskanal begrenzenden Kanalwände ausgebildet ist mit H ≤(0,5 T₂) - insbesondere mit (0,2T₂)≤ H ≤(0,4T₂) und mit a ≤ (0,2L) - insbesondere a ≤ (0,1L). Hierdurch wird in einfacher Weise die Einstellung der Steifigkeit des Profiles bei einfacher Herstellbarkeit der nutförmigen Vertiefung bis in eine große Tiefe des Profils bis zur maximalen Profiltiefe ermöglicht.

Besonders vorteilhaft ist die Ausbildung eines Laufstreifenprofils gemäß den Merkmalen von Anspruch 7, wobei der den rohrförmigen, Durchfluss ermöglichende Öffnungskanal nach radial innen begrenzende Vertiefungsgrund zwischen den beiden Einmündungspositionen in die begrenzenden Rillen mit einer Erstreckungslänge L ausgebildet ist, wobei wenigstens im Bereich einer Einmündung - insbesondere beider Einmündungen - ausgehend von der Einmündungsposition der Vertiefungsgrund mit einem Erstreckungsabschnitt der Erstreckungslänge a ausgebildet ist, der frei von linienförmigen Erhebungen ist, wobei a ≤ (0,2L) - insbesondere a ≤(0,1L). Hierdurch können in einfacher, optimierter Weise die Vorteile der zur maximalen Profiltiefe ausgebildeten nutförmigen Vertiefung ermöglicht werden.

Besonders vorteilhaft ist die Ausbildung eines Laufstreifenprofils gemäß den Merkmalen von Anspruch 8 mit einer Erstreckungshöhe T₂ des radial inneren Erstreckungsabschnitt, die mit T₂ > B ausgebildet ist. Hierdurch kann in einfacher zuverlässiger Weise ermöglicht werden, dass bei Nutzung des Durchflusskanals die Profiloberfläche mit seinen Vorteilen im Neuzustand des Reifens hohe Steifigkeit des Profils ohne unerwünscht hohe Flexibilität des zwischen Durchflusskanals und Bodenkontaktfläche bildender Oberfläche befindlichen Gummimaterials gewährleistet wird.

Besonders vorteilhaft ist die Ausbildung eines Laufstreifenprofils gemäß den Merkmalen von Anspruch 9 mit einer Erstreckungshöhe T₂ des radial inneren Erstreckungsabschnitt und mit einer Erstreckungshöhe T₁ des radial äußeren Erstreckungsabschnitt, die mit mit (2T₁) ≥T₂ > T₁ ausgebildet ist. Hierdurch kann in einfacher Weise der wirkungsvolle Zeitpunkt des Öffnens des Durchflusskanals zu einer Rille sichergestellt werden.

Besonders vorteilhaft für einen produzierbaren und wirkungsvollen, sinnvollen Einsatz im Reifen ist die Ausbildung eines Laufstreifenprofils gemäß den Merkmalen von Anspruch 10, bei welchem die Öffnungsbreite B des Durchfluss ermöglichenden Öffnungskanals mit 2mm ≤ B ≤ 20mm ausgebildet ist.

Besonders vorteilhaft ist die Ausbildung eines Laufstreifenprofils gemäß den Merkmalen von Anspruch 11, bei welchem das Laufstreifenprofil ein Laufstreifenprofil eines PKW-Reifens und die Öffnungsbreite B des Durchfluss ermöglichenden Öffnungskanals mit 2mm ≤ B ≤ 6mm ausgebildet ist. Hierdurch wird in bei dem Einsatz in einem PKW-Reifen der für ein PKW-Reifenprofile wichtige Ausbildungsbereich erfasst.

Besonders vorteilhaft ist die Ausbildung eines Laufstreifenprofils gemäß den Merkmalen von Anspruch 12, bei welchem das Laufstreifenprofil ein Laufstreifenprofil eines Nutzfahrzeug-Reifens und die Öffnungsbreite B des Durchfluss ermöglichenden Öffnungskanals mit 6mm ≤ B ≤ 20mm ausgebildet ist. Hierdurch wird in bei dem Einsatz in einem Nutzfahrzeug-Reifen der für ein Nutzfahrzeug-Reifen wichtige Ausbildungsbereich erfasst.

Die Erfindung wird im Folgenden an Hand der in den Figuren 1 bis 18 dargestellten Ausführungsbeispiele näher erläutert. Hierin zeigen
- Fig. 1: Abschnitt des Laufstreifenprofil eines Fahrzeugluftreifens mit Umfangsrippen in Draufsicht,
- Fig. 2: Querschnittsdarstellung des Laufstreifenprofilabschnitts von Fig.1 gemäß Schnitt II-II von Fig 1,
- Fig. 3: Querschnittsdarstellung des Laufstreifenprofilabschnitts von Fig. 1 gemäß Schnitt III-III von Fig.1,
- Fig. 4: Laufstreifenprofilabschnitt der Figuren 1 bis 3 gemäß Schnitt IV-IV von Fig.3,
- Fig. 5: Laufstreifenprofilabschnitt der Figuren 1 bis 3 gemäß Schnitt V-V von Fig.3,
- Fig. 6: Laufstreifenprofilabschnitt der Figuren 1 bis 3 gemäß Schnitt VI-VI von Fig.3,
- Fig. 7: Laufstreifenprofilabschnitt von Fig. 1 in alternativer Ausführung in Draufsicht,
- Fig. 8: Laufstreifenprofilabschnitt von Fig.7 in Schnittdarstellung gemäß Schnitt VIII- VIII von Fig.7,
- Fig. 9: Laufstreifenprofilabschnitt von Fig. 7 in Schnittdarstellung gemäß Schnitt IX-IX von Fig. 7,
- Fig. 10: Laufstreifenprofilabschnitt der Figuren 7 bis 9 gemäß Schnitt X-X von Fig.9,
- Fig. 11: Laufstreifenprofilabschnitt der Figuren 7 bis 9 gemäß Schnitt XI-XI von Fig.9,
- Fig. 12: Laufstreifenprofilabschnitt der Figuren 7 bis 9 gemäß Schnitt XII-XII von Fig.9,
- Fig. 13: Darstellung eines Lamellenblechs zur Erzeugung des in den Figuren 1 bis 3 dargestellten Feineinschnitts,
- Fig. 14: Darstellung des Lamellenblechs von Fig. 13 in Ansicht XIV-XIV von Fig.13,
- Fig. 15: Darstellung eines Reifenformelementabschnitts mit eingebautem Lamellenblechen der Fig. 13 und 14 zur Erzeugung der Feineinschnitte von Fig.1 bis Fig. 3,
- Fig. 16: Darstellung eines Lamellenblechs zur Erzeugung des Feineinschnitts der Figuren 7 bis 9,
- Fig. 17: Darstellung des Lamellenblechs von Fig.16 in Ansicht XVII-XVII von Fig. 16 und
- Fig. 18: Darstellung eines Reifenformelementabschnittes mit eingebauten Lamellenblechen der Fig. 16 und 17 zur Erzeugung des Feineinschnittes der Figuren 7 bis 9.

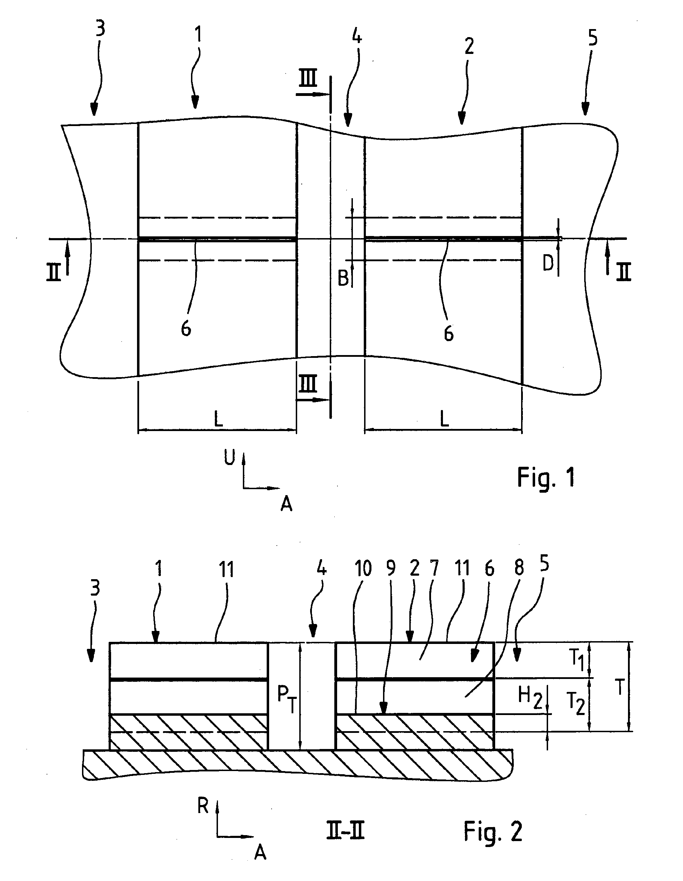

Die Figuren 1 bis 6 zeigen einen Ausschnitt eines Laufstreifenprofils für PKW-Reifen radialer Bauart. Wie in den Figuren 1 und 2 dargestellt ist, weist das Laufstreifenprofil in bekannter Weise innerhalb der Bodenaufstandsfläche drei über den gesamten Umfang des Fahrzeugluftreifens erstreckte in Umfangsrichtung ausgerichtete und in axialer Richtung A benachbarte Umfangsrillen 3, 4 und 5 und zwei ebenfalls in Umfangsrichtung U ausgerichtete und über den gesamten Umfang erstreckte Umfangsrippen 1 und 2 auf, von denen die Umfangsrippe 1 in axialer Richtung A von den Umfangsrillen 3 und 4 und die Umfangsrippe 2 in axialer Richtung A von den Umfangsrillen 4 und 5 axial begrenzt ist.

Wie in Fig. 2 zu erkennen ist, erstrecken sich die Umfangsrippen 1 und 2 dabei in radialer Richtung R aus dem Rillengrund der Umfangsrillen 3, 4 und 5 bis zu der die Umfangsrippen 1 und 2 jeweils nach radial außen begrenzenden, die Straßenkontaktoberfläche bildenden Mantelfläche 11 über ein in radialer Richtung R gemessenes Erstreckungsmaß P_{T}, welches die Profiltiefe im Bereich der Umfangsrillen 3, 4 bzw. 5 am Neureifen angibt.

Die Umfangsrippen 1 und 2 sind über den Umfang des Fahrzeugluftreifens verteilt jeweils mit Einschnitten 6 versehen, die sich in axialer Richtung A jeweils durch die gesamte Erstreckungsbreite L der Umfangsrippe 1 bzw. der Umfangsrippe 2 erstrecken, wobei die Einschnitte 6 der Umfangsrippe 1 auf der einen axialen Begrenzungsseite der Umfangsrippe 1 in die Umfangsrille 3 und auf der anderen axialen Begrenzungsseite in die Umfangsrille 4 und die Feineinschnitte 6 der Umfangsrippe 2 auf der einen axialen Begrenzungsseite der Umfangsrippe 2 in die Umfangsrille 4 und auf der anderen axialen Begrenzungsseite der Umfangsrippe 2 in die Umfangsrille 5 münden.

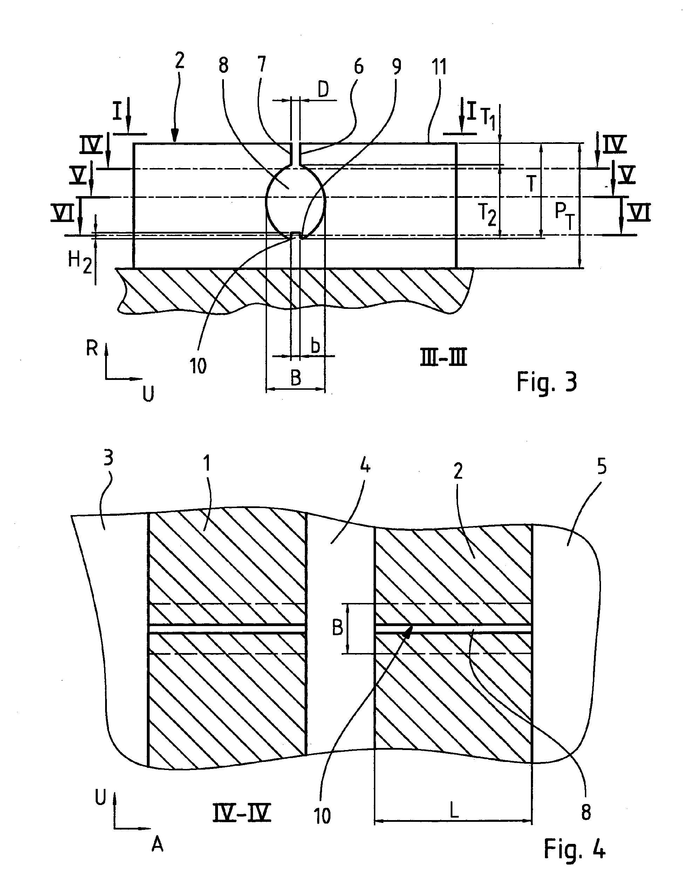

Die Einschnitte 6 erstrecken sich in radialer Richtung R - wie in den Figuren 2 und 3 zu erkennen - über eine in radialer Richtung R gemessenen Erstreckungstiefe T ausgehend von der radial äußeren, die jeweilige Umfangsrippe 1 bzw. 2 nach außen begrenzenden Mantelfläche 11 bis zu dem den Einschnitt 6 nach radial innen begrenzenden Vertiefungsgrund 9. Die Einschnitte 6 sind dabei jeweils in ihrem radial äußeren Erstreckungsabschnitt als Feineinschnitt 7 mit der Einschnittsbreite D und in ihrem radial inneren Erstreckungsabschnitt als rohrförmiger Durchlasskanal bzw. Durchflusskanal 8 der Rohrbreite B ausgebildet. Der Feineinschnitt 7 erstreckt sich dabei ausgehend von der radial äußeren, die jeweilige Umfangsrippe 1 bzw. 2 nach außen begrenzenden Mantelfläche 11 über ein radiales Erstreckungsmaß T₁ nach radial innen. Am radialen Erstreckungsende des Feineinschnittes 7 beginnt der der radiale Erstreckungsbereich des Durchlasskanals 8, welcher sich in radialer Richtung R über ein Erstreckungsmaß T₂ nach innen bis zum Vertiefungsgrund 9, welcher den Durchlasskanal 8 nach radial innen begrenzt, erstreckt. Der rohrförmige Durchlasskanal 8 hat einen im Wesentlichen ovale Öffnungsquerschnitt mit einer senkrecht zur Erstreckungsrichtung des Durchlasskanals 8 sowie zur radialen Richtung R ausgebildeten maximalen Öffnungsbreite B, wobei die maximale Öffnungsbreite mit B ≥2D) ausgebildet ist und wobei die radiale Erstreckung T₂ des Durchlasskanals 8 mit T₂ > B ausgebildet ist. Die radiale Erstreckung T₂ des Durchlasskanals 8 und die radiale Erstreckung T₁ des Feineinschnitts 7 sind dabei derart ausgebildet, dass (2T₁) ≥ T₂ ≥ T₁ ausgebildet ist.

Die Breite B ist dabei derart ausgebildet, dass 2mm ≤ B ≤ 6mm ausgebildet ist.

Die Schnittbreite D des Feineinschnitts ist 0,3 mm ≤ D ≤ 0,8mm gewählt.

Im Vertiefungsgrund 9 ist eine über den gesamten Erstreckungsbereich der Durchflusskanals 8 parallel zur Erstreckung des Durchlasskanals 8 ausgebildete linienförmige Erhebung 10 der in radialer Richtung R gemessenen Erstreckungshöhe H₂ mit quer zur Erstreckungsrichtung der linienförmigen Erhebung 10 gemessener maximaler Erstreckungsbreite b ausgebildet mit (0,1 T₂) ≤ H₂ ≤ (0,2T₂) und mit b ≤ H_{2.}

Im dargestellten Ausführungsbeispiel der Figuren 1 bis 6 erstreckt sich der Einschnitt 5 in axialer Richtung A des Fahrzeugluftreifens und der Feineinschnitt 6 ist ebenso wie die linienförmige Erhebung 10 mittensymmetrisch zum im Wesentlichen oval geformten Durchlasskanal 8 positioniert. Die linienförmige Erhebung 10 erstreckt sich dabei parallel zum Durchlasskanal 8 und zum Feineinschnitt 6 durch die jeweilige Umfangsrippe 1 bzw. 2 hin durch. Im dargestellten Ausführungsbeispiel ist die Erstreckungslänge des Rillengrundes 9 ebenso wie die Erstreckungslänge der linienförmigen Erhebung 10 durch die Erstreckungslänge L angegeben.

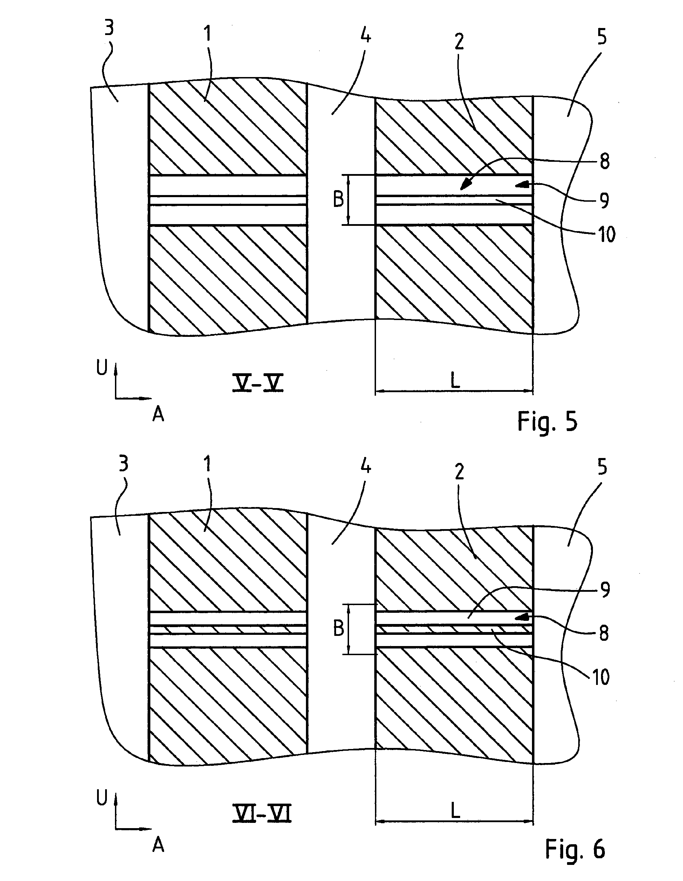

Die Figuren 3, 4, 5 und 6 zeigen Querschnitte des Laufstreifenprofils in unterschiedlichen radialen Positionen, wobei diese Querschnitte auch die Draufsicht auf das Profil bei erfolgtem Abrieb bis zur jeweiligen radialen Position wiedergeben. Den Figuren 3, 4, 5 und 6 kann entnommen werden, dass mit zunehmend abgefahrenem Reifenprofil zunächst der Feineinschnitt 6 des Einschnitts 7 verschwindet und sich nach dem Verschwinden dann - wie in Fig. 4, Fig.5 und Fig.6 zu erkennen ist - der Durchlasskanal 8 zu einer neuen Rille öffnet, wobei die linienförmige Erhebung 10 - wie in Fig.5 und Fig.6 zu erkennen ist, dann als zusätzliche Griffkante in der neu entstandenen Rille zur Wirkung kommt.

Den Figuren 3, 5 und 6 kann entnommen werden, dass die linienförmige Erhebung 10 auch als Abriebsindikator eingesetzt werden kann. Solange die linienförmige Erhebung 10 selbst nicht in Berührkontakt mit der Straße gerät bzw. die linienförmige Erhebung 10 mit ihrer radial nach außen gerichteten Oberfläche noch einen radialem Abstand zur radial äußere Mantelfläche 11 der jeweiligen Umfangsrippe 1 bzw. 2 aufweist, ist die Profiltiefe noch größer als H₂.

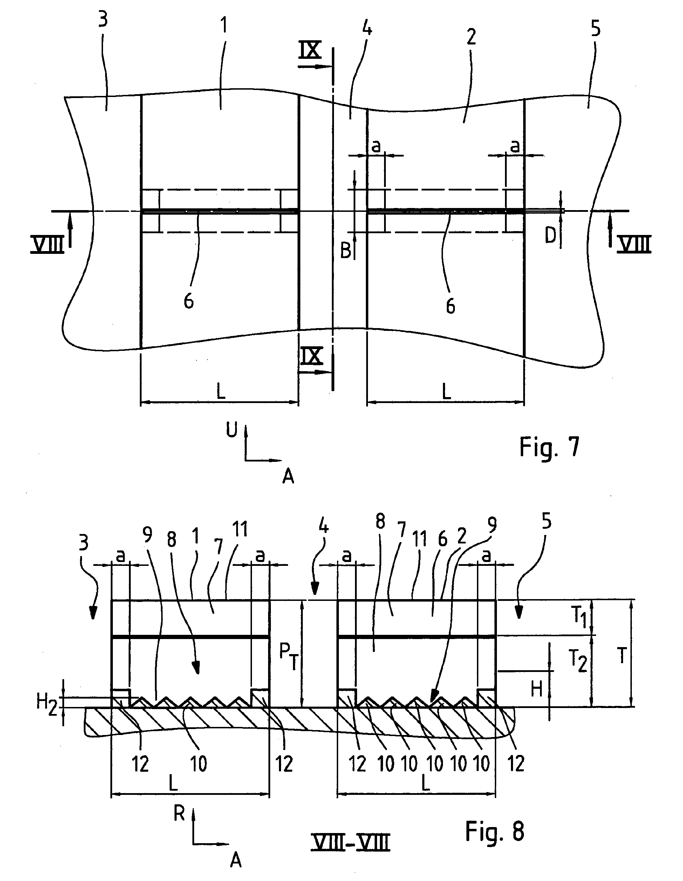

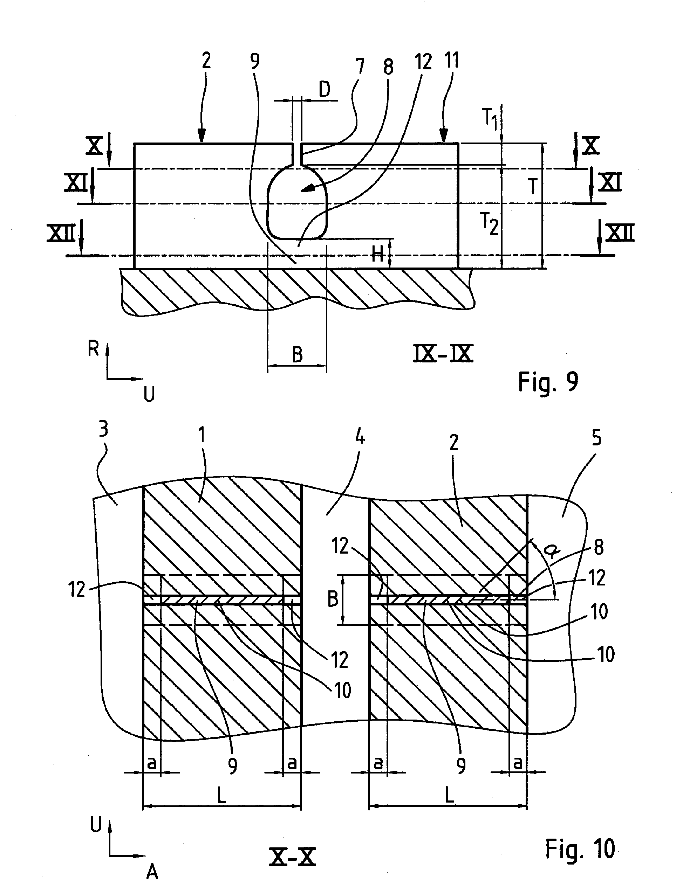

Die Figuren 7 bis 12 zeigen das Laufstreifenprofil der Figuren 1 bis 6 in alternativer Ausführung des Durchlasskanals 8. In den Fig.8, Fig. 10, Fig.11 und Fig.12 ist erkennbar, dass im Vertiefungsgrund 9 mehrere parallele linienförmige Erhebungen 10 ausgebildet sind. Die Figuren zeigen dabei eine Ausführung, bei der die linienförmigen Erhebungen 10 über den gesamten Vertiefungsgrund 9 geradlinig verlaufend und in ihrer Erstreckungsrichtung unter Einschluss eines Winkels α zur Erstreckungsrichtung des Durchlasskanals 8 - d.h. in der dargestellten Ausführung zur axialen Richtung A des Fahrzeugluftreifens - ausgebildet sind.

Die Figuren 7 bis 12 zeigen darüber hinaus eine weitere Ausführung, bei der im Vertiefungsgrund 9 des rohrförmigen Öffnungskanals 8 zu beiden axialen Erstreckungsenden des rohrförmigen Durchlasskanals 8 jeweils ausgehend von der angrenzenden Umfangsrille 4 bzw. 5 bei der Umfangrippe 2 und ausgehend von der Umfangsrille 3 bzw. 4 bei der Umfangsrippe 1 jeweils eine stegförmige Anhebung 12 ausgebildet ist, die sich in radialer Richtung R über eine Erstreckungshöhe H aus dem Vertiefungsgrund 9 erstreckt und in Umfangsrichtung U des Fahrzeugluftreifens sich quer durch den rohrförmigen Durchlasskanal 8 hindurch erstreckt. Die stegförmigen Anhebungen 12 sind dabei mit einer in axialer Richtung A des Fahrzeugluftreifens gemessenen Erstreckungsbreite a ausgebildet. Die radiale Erstreckungshöhe Höhe H der stegförmigen Anbindungen ist dabei mit H ≤(0,5T₂) ausgebildet.

In einer besonderen Ausbildung ist (0,2T₂) < H < (0,4T₂) gewählt. Die Erstreckungsbreite a der stegförmigen Anhebung ist mit a ≤ (0,2 L) ausgebildeten. In einer besonderen Ausführung ist a ≤(0,1 L) gewählt.

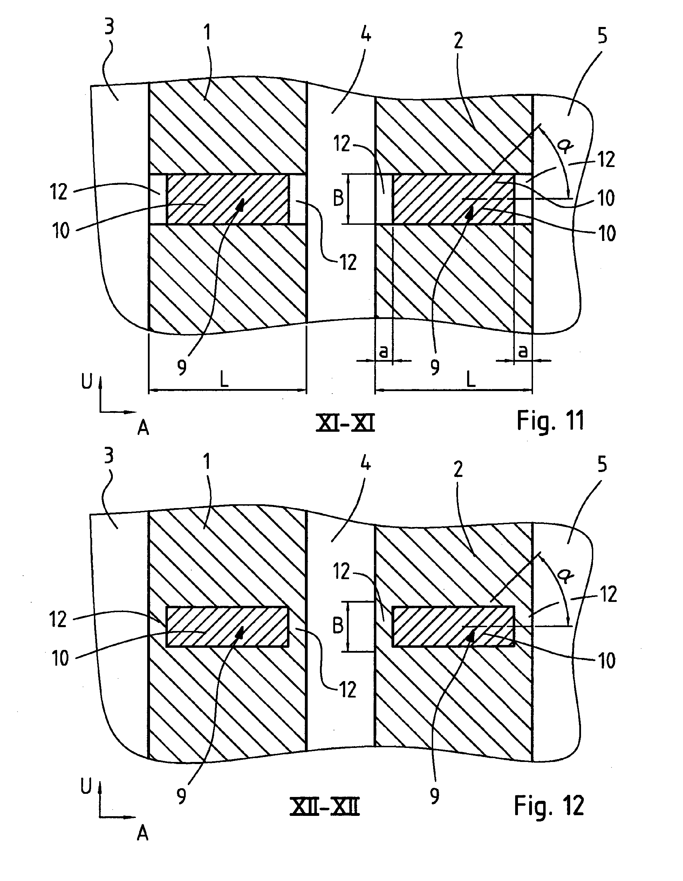

Die stegförmigen Anhebungen 12 sind an ihrer radial nach außen gerichteten Oberfläche frei von linienförmigen Erhebungen ausgebildet. Im Erstreckungsbereich zwischen den beiden den Durchlasskanal 8 jeweils zur benachbarten Umfangsrille 3 und 4 bzw. 4 und 5 begrenzenden stegförmigen Anhebungen 12 ist der Vertiefungsgrund 9 - wie in den Fig. 11 und Fig. 12 zu erkennen - über dessen gesamte Erstreckungslänge mit parallelen linienförmigen Erhebungen 10 ausgebildet.

Die Erstreckungshöhe H₂ der linienförmigen Erhebungen ist dabei so gewählt, dass H₂ ≤ H ist.

Der Winkel α der linienförmigen Erhebungen ist bei den dargestellten Umfangsrippen 1 und 2 mit 30° ≤ α ≤ 60° ausgebildet. In der dargestellten Ausführung ist α = 45° gewählt.

Wie Fig. 8 zu entnehmen, ist die Querschnittform einer linienförmigen Erhebung 10 dreickig mit einer Oberflächenquerschnittskontur, die als ein auf dem Kopf stehendes V mit zwei sich im Scheitelpunkt der linienförmigen Erhebung 10 schneidenden Schenkeln ausgebildet ist. Fig. 3. zeigt eine alternative Ausbildung der Querschnittsform der linienförmigen Erhebung 10, bei der diese mit trapezförmigem, fast rechteckigem Querschnitt ausgebildet ist.

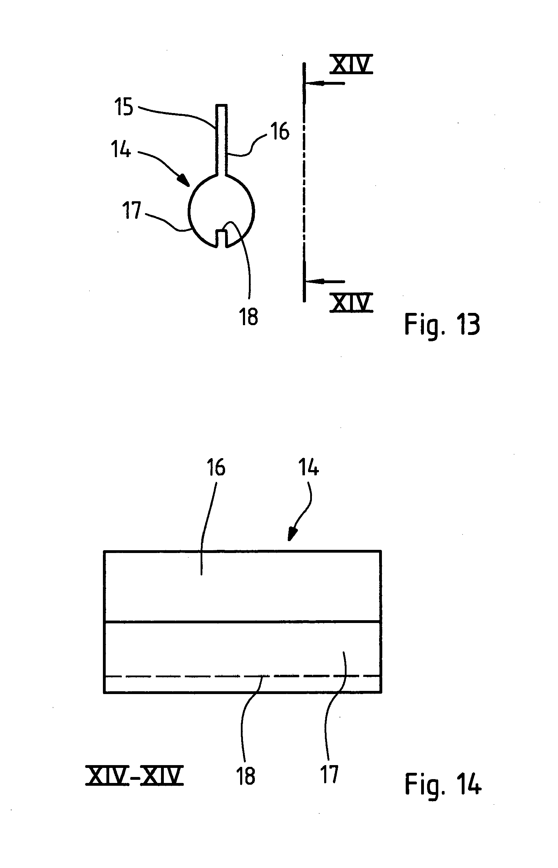

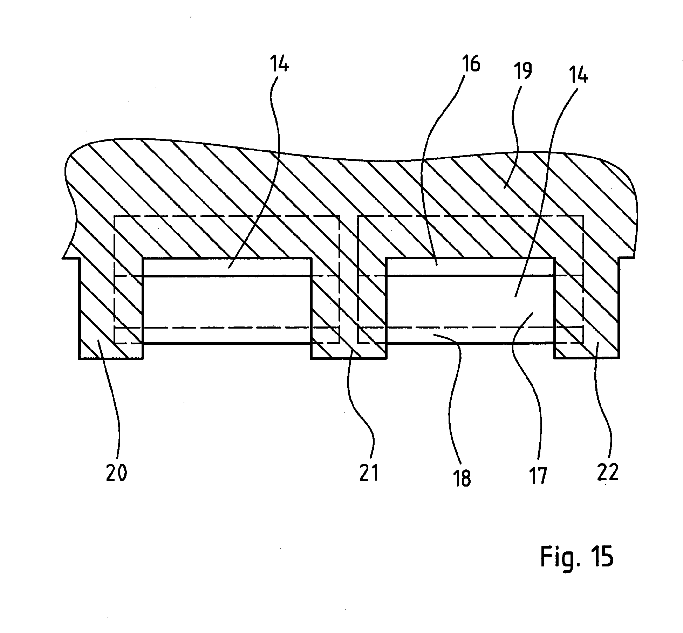

Die Figuren 13 und 14 zeigen ein Lamellenblech 14 zur Herstellung des Einschnitts 6 der Figuren 1 bis 6, bei dem ein gefalztes Lamellenblech 14 mit zwei Lamellenblechschenkel 15 und 16 bildenden aufeinander liegenden Blechenden und einem dazwischen ausgebildeten rohrförmig gebogenen Mittelteil 17 ausgebildet ist. Das rohrförmig gebildete Mittelteil 17 ist im Querschnitt nahezu oval ausgebildet und auf dem den beiden Lamellenblechschenkeln 15, 16 gegenüber liegenden Ende des Ovals mit einer nach innen geformten linienförmigen Nase 18 ausgebildet ist. Zur Herstellung der Einschnitte 6 werden - wie in Fig. 15 dargestellt - in ein Formteil 19 der Vulkanisierform bekannter Art mit zur Erzeugung der Umfangsrillen 3, 4 und 5 des Laufstreifenprofils ausgebildeten Formrippen 20, 21 und 22 jeweils Lamellenbleche 14 mit ihren Lamellenblechschenkeln 15 und 16 im Formteil 19 und mit ihren axialen Erstreckungsenden in den Rippen 20 und 21 bzw. 21 und 22 befestigt, so dass die parallelen Lamellenblechschenkel 15 und 16 bei der Ausformung des Reifenprofils den Feineinschnitt 7 und das rohrförmige gebogene Mittelteil 17 den rohrförmigen Durchlasskanal 8 des Einschnitts 6 ausformen. Die linienförmige Nase 18 formt bei der Einformung des Reifens jeweils eine linienförmige Erhebung 10 aus.

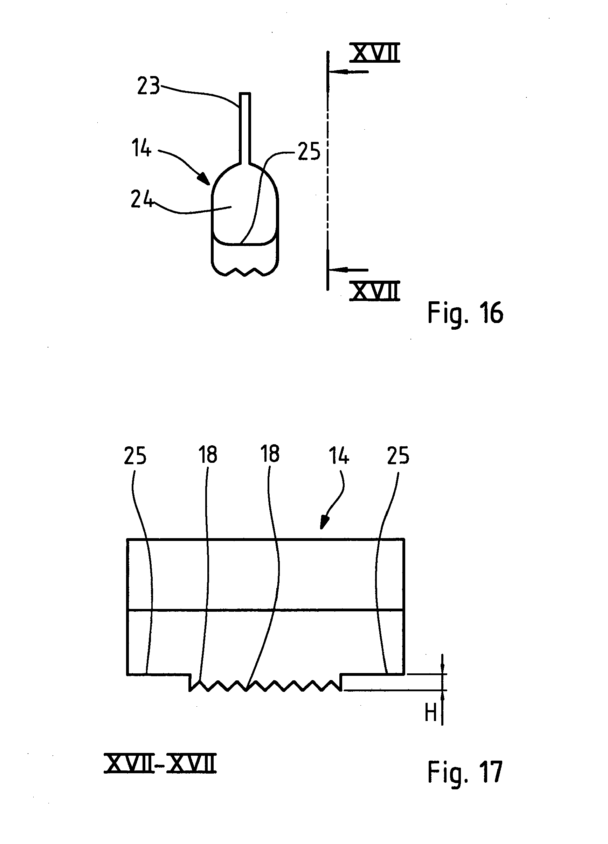

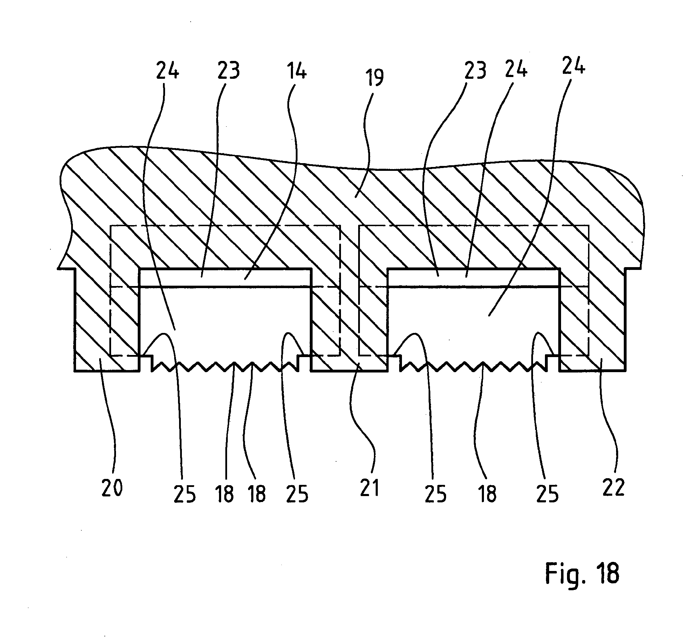

Die Figuren 16 und 17 zeigen die Ausführung eines Lamellenbleches 14 zur Herstellung eines gemäß den Figuren 7 bis 12 ausgebildeten Einschnitts 6. An einem geradlinigen Lamellenblech 23 ist eine Formstab 24 angegossen. Der Formstab 24 ist im Querschnitt nahezu tropfenförmig ausgebildet, wobei er in den axialen Endbereichen mit vom Lamellenblech 23 gesehen um das Maß H reduzierter Querschnittshöhe und - wie in Fig.16 zu erkennen ist - an seiner vom Lamellenblech 23 wegweisenden Ende mit nahezu ebener Konturoberfläche ausgebildet. In dem Erstreckungsabschnitt zwischen den beiden axialen Endbereichen ist der Formstab 24 an dem vom Lamellenblech 23 wegweisenden Ende mit eingegossenen parallelen linienförmigen Vertiefungen 18 ausgebildet. Zur Herstellung der Einschnitte 6 werden - wie in Fig. 18 dargestellt ist - die Lamellenbleche 14 der Figuren 16 und 17 in ein Reifenformteil 19 einer Vulkanisierform bekannter Art mit den zur Ausbildung der Umfangsrillen 3, 4 und 5 ausgebildeten Formrippen 20, 21 und 22 in bekannter Weise montiert, wobei das Lamellenblech 23 längs seiner Erstreckung in der Formteil 19 und das Lamellenblech 23 und der angegossene Formstab 24 an beiden Erstreckungsenden jeweils in Formrippen 20 und 21 bzw. 21 und 22 befestigt wird. Das Lamellenblech 23 formt bei der Einformung des Reifens mit seinem nicht in der Form 19 verschwindenden Erstreckungsbereich den Feineinschnitt 7 des Einschnitts 6, der angegossenen Formstab 24 mit seinem zwischen den beiden Rippen 20 und 21 bzw. 21 und 22 ausgebildeten Erstreckungsabschnitt formt den rohrförmigen Durchlasskanal 8, wobei die Anhebung 25 in ihrem Erstreckungsbereich außerhalb der Rippen 20, 21 bzw. 22 jeweils eine stegförmige Anhebung 12 im Durchlasskanal 8 und der zwischen den Anhebungen 25 ausgebildete Erstreckungsabschnitt den zwischen den stegförmigen Anhebungen 12 ausgebildeten Vertiefungsgrund 9 und wobei die linienförmigen Erhebungen 18 jeweils eine linienförmige Erhebung 10 im Vertiefungsgrund 9 ausformen.

In Bild 18 ist erkennbar, dass die Ausbildung nicht nur eine Ausbildung mit stegförmiger Anhebung 12 des Vertiefungsgrundes ermöglicht, sondern dass darüber hinaus durch die unterschiedliche Erstreckungshöhe der zur Befestigung vorgesehenen Anhebungsbereiche 25 und der zwischen den Anhebungen 25 ausgebildeten Erstreckungsbereiche eine sichere Befestigung des Lamellenbleches 23 in den Rippen 21 bzw. 22 der Form 19 eine Ausbildung des Vertiefungsgrund 9 fast bis in gleiche Tiefe wie der durch die Rippen 20, 21 und 22 ausgebildete Rillengrund der Umfangsrillen ermöglicht.

Auch wenn die Figuren 1 bis 6 lediglich eine Ausbildung mit einer parallel zum Einschnitt ausgerichteten linienförmigen Vertiefung zeigt, ist in einer anderen - nicht dargestellter - Ausführungsform der Vertiefungsgrund 9 mit mehreren - beispielsweise zwei oder drei - derartigen parallelen linienförmigen Erhebungen, die sich parallel zur Durchflussöffnung erstrecken, ausgebildet.

Die Querschnittsform des rohrförmigen Durchlasskanals 8 ist - wie oben beschrieben - im Wesentlichen oval oder im Zusammenhang mit den Ausführungen von Fig. 7 bis Fig. 12 und Fig. 16 als im Wesentlichen tropfenförmig mit nahezu flachem, fast ebenem Vertiefungsgrund dargestellt und beschrieben.

In anderer - nicht dargestellter - Ausführung ist der rohrförmige Durchlasskanal 8 mit einem Querschnitt ausgebildet, der nahezu rechteckig mit abgerundeten Ecken ausgebildet ist.

Die Erfindung ist auch bei Ausbildungen mit Nutzfahrzeugreifen einsetzbar, wobei bei Nutzfahrzeugreifen die Öffnungsbreite B des Durchflusskanals mit 6mm ≤ B ≤ 20mm ausgebildet wird. Bei Nutzfahrzeugreifen ist die Schnittbreite D mit 1mm ≤ D ≤ 3mm ausgebildet.

### Bezugszeichenliste

### (Teil der Beschreibung)

- 1: Umfangsrippe
- 2: Umfangsrippe
- 3: Umfangsrille
- 4: Umfangsrille
- 5: Umfangsrille
- 6: Einschnitt
- 7: Feineinschnitt
- 8: Rohrförmiger Durchlasskanal
- 9: Vertiefungsgrund
- 10: Linienförmige Erhebung
- 11: Radial äußere Oberfläche
- 12: Stegförmige Anhebung
- 13:
- 14: Lamellenblech
- 15: Lamellenblechschenkel
- 16: Lamellenblechschenkel
- 17: Rohrförmig gebogenes Mittelteil
- 18: Nach innen geformte linienförmige Erhebung
- 19: Reifenformteil
- 20: Rippe
- 21: Rippe
- 22: Rippe
- 23: Lamellenblech
- 24: Angegossener Formstab
- 25: Anhebung

## Patentansprüche

1. Laufstreifenprofil eines Fahrzeugluftreifens mit radial erhabenen, durch Rillen (3,4,5) voneinander beabstandeten Profilelementen (1,2) mit schmalen linien- oder nutförmigen Vertiefungen (6) in Profilelementen (1,2), die sich jeweils durch das jeweilige Profilelement (1,2) hindurch erstrecken und in das Profilelement (1,2) begrenzenden Rillen (3,4,5) münden,
wobei ein oder mehrere schmale linien- oder nutförmige Vertiefungen (6) in radialer Richtung R mit einem radial inneren Erstreckungsabschnitt einer Erstreckungshöhe T₂ und einem radial äußeren Erstreckungsbereich einer Erstreckungshöhe T₁ im Reifen ausgebildet sind, wobei sich der radial innere Erstreckungsabschnitt in radialer Richtung R vom tiefsten Punkt des Vertiefungsgrundes (9) bis zum radial äußeren Erstreckungsbereich und der radial äußere Erstreckungsbereich vom radial inneren Erstreckungsbereich bis zu der das Profilelement (1,2) nach radial außen begrenzenden, die Bodenkontaktfläche bildenden Oberfläche (11) erstreckt, und wobei die nutförmige Vertiefung (6) im radial äußeren Erstreckungsbereich als Feineinschnitt (7) mit einer Schnittbreite D und im radial inneren Erstreckungsbereich als rohrförmiger Öffnungskanal (8) mit maximaler Öffnungsbreite B ausgebildet ist mit B ≥ (2D),
**dadurch gekennzeichnet,**
**dass** an dem den rohrförmigen Öffnungskanal (8) nach radial innen begrenzenden Vertiefungsgrund (9) eine oder mehrere - insbesondere parallele - linienförmige radiale Erhebung(en) (10) ausgebildet ist bzw. sind.

2. Laufstreifenprofil gemäß den Merkmalen von Anspruch 1,
bei dem die linienförmige Erhebung(en) (10) - insbesondere geradlinig - parallel zum Verlauf des Öffnungskanals (8) verlaufend ausgebildet ist bzw. sind.

3. Laufstreifenprofil gemäß den Merkmalen von Anspruch 1,
bei dem die linienförmige Erhebung(en) (10) -insbesondere geradlinig - schräg verlaufend unter Einschluss eines Schnittwinkels größer Null Grad zum Verlauf des Öffnungskanals ausgebildet ist bzw. sind.

4. Laufstreifenprofil gemäß den Merkmalen von Anspruch 1,
bei dem die linienförmige Erhebung(en) (10) - insbesondere geradlinig - parallel verlaufend zum Verlauf des Feineinschnittes (7) in der das Profilelement (1,2) nach radial außen begrenzenden Oberfläche (11) ausgebildet ist bzw. sind.

5. Laufstreifenprofil gemäß den Merkmalen von Anspruch 1,
bei dem die linienförmige Erhebung(en) (10) - insbesondere geradlinig - schräg verlaufend unter Einschluss eines Schnittwinkels α größer Null Grad zum Verlauf des Feineinschnittes (7) in der das Profilelement (1,2) nach radial außen begrenzenden Oberfläche (11) ausgebildet ist bzw. sind.

6. Laufstreifenprofil gemäß den Merkmalen von einem der vorangegangenen Ansprüche,
wobei der den rohrformige Öffnungskanal (8) nach radial innen begrenzende Vertiefungsgrund (9) zwischen den beiden Einmündungspositionen in die begrenzenden Rillen (3,4,5) mit einer Erstreckungslänge L ausgebildet ist, wobei der Öffnungskanal (8) wenigstens im Bereich einer Einmündung - insbesondere beider Einmündungen - ausgehend von der Einmündungsposition mit einem Erstreckungsabschriitt der Erstreckungslänge a ausgebildet ist, in welchem eine um eine in radialer Richtung R aus dem Vertiefungsgrund um eine Höhe H angehobene stegförmige, quer zur Erstreckungsrichtung des Öffnungskanals (8) erstreckte Anbindung (12) der beiden den Öffnungskanal (8) begrenzenden Kanalwände ausgebildet ist mit H ≤(0,5 T₂) - insbesondere mit (0,2T₂)≤ H ≤(0,4T₂) und mit a ≤ (0,2L) - insbesondere a ≤ (0,1L).

7. Laufstreifenprofil gemäß den Merkmalen von einem der vorangegangenen Ansprüche,
wobei der den rohrförmigen Öffnungskanal (8) nach radial innen begrenzende Vertiefungsgrund (9) zwischen den beiden Einmündungspositionen in die begrenzenden Rillen (3,4,5) mit einer Erstreckungslänge L ausgebildet ist, wobei wenigstens im Bereich einer Einmündung - insbesondere beider Einmündungen - ausgehend von der Einmündungsposition der Vertiefungsgrund mit einem Erstreckungsabschnitt der Erstreckungslänge a ausgebildet ist, der frei von linienförmigen Erhebungen ist, wobei a ≤ (0,2L) - insbesondere a ≤ (0,1L).

8. Laufstreifenprofil gemäß den Merkmalen von einem der vorangegangenen Ansprüche,
mit einer Erstreckungshöhe T₂ des radial inneren Erstreckungsabschnitts, die mit T₂ > B ausgebildet ist.

9. Laufstreifenprofil gemäß den Merkmalen von einem der vorangegangenen Ansprüche,
mit einer Erstreckungshöhe T₂ des radial inneren Erstreckungsabschnitts und mit einer Erstreckungshöhe T₁ des radial äußeren Erstreckungsabschnitts, die mit mit (2T1₎ ≥T₂ > T₁ ausgebildet ist.

10. Laufstreifenprofil gemäß den Merkmalen von einem der vorangegangenen Ansprüche,
bei welchem die Öffnungsbreite B des Öffnungskanals (8) mit 2mm ≤ B ≤ 20mm ausgebildet ist.

11. Laufstreifenprofil gemäß den Merkmalen von Anspruch 10,
bei welchem das Laufstreifenprofil ein Laufstreifenprofil eines PKW-Reifens und die Öffnungsbreite B des Öffnungskanals mit 2mm ≤ B ≤ 6mm ausgebildet ist.

12. Laufstreifenprofil gemäß den Merkmalen von Anspruch 10,
bei welchem das Laufstreifenprofil ein Laufstreifenprofil eines Nutzfahrzeug-Reifens und die Öffnungsbreite B des Öffnungskanals mit 6mm ≤ B ≤ 20mm ausgebildet ist.

## Claims

1. Tread-strip profile of a pneumatic vehicle tyre having radially elevated profile elements (1, 2) which are spaced apart from one another by grooves (3, 4, 5) with narrow linear or channel-shaped depressions (6) in profile elements (1, 2), which depressions (6) extend in each case through the respective profile element (1, 2) and open into grooves (3, 4, 5) which delimit the profile element (1, 2), one or more narrow linear or channel-shaped depressions (6) being formed in the tyre in the radial direction R with a radially inner extent section of an extent height T₂ and a radially outer extent region of an extent height T₁, the radially inner extent section extending in the radial direction R from the lowest point of the depression bottom (9) as far as the radially outer extent region and the radially outer extent region extending from the radially inner extent region as far as the surface (11) which delimits the profile element (1, 2) radially to the outside and forms the ground contact area, and the channel-shaped depression (6) being configured in the radially outer extent region as a sipe (7) with a sipe width D and in the radially inner extent region as a tubular opening channel (8) with a maximum opening width B, where B ≥ (2D), **characterized in that** one or more, in particular parallel, linear radial elevation/elevations (10) is/are formed on the depression bottom (9) which delimits the tubular opening channel (8) radially to the inside.

2. Tread-strip profile in accordance with the features of Claim 1, in which the linear elevation/elevations (10) is/are configured so as to run, in particularly rectilinearly, parallel to the course of the opening channel (8).

3. Tread-strip profile in accordance with the features of Claim 1, in which the linear elevation/elevations (10) is/are configured so as to run, in particular rectilinearly, obliquely, including an angle of intersection of greater than zero degrees with respect to the course of the opening channel.

4. Tread-strip profile in accordance with the features of claim 1, in which the linear elevation/elevations (10) is/are configured so as to run, in particular rectilinearly, parallel to the course of the sipe (7) in the surface (11) which delimits the profile element (1, 2) radially to the outside.

5. Tread-strip profile in accordance with the features of Claim 1, in which the linear elevation/elevations (10) is/are configured so as to run, in particular rectilinearly, obliquely, including an angle of intersection α of greater than zero degrees with respect to the course of the sipe (7) in the surface (11) which delimits the profile element (1, 2) radially to the outside.

6. Tread-strip profile in accordance with the features of one of the preceding claims, the depression bottom (9) which delimits the tubular opening channel (8) radially to the inside being configured with an extent length L between the two opening positions into the adjoining grooves (3, 4, 5), the opening channel (8) being configured, at least in the region of one opening, in particular of both openings, with an extent section of extent length a starting from the opening position, in which extent section a web-shaped connection (12), which is raised out of the depression bottom in the radial direction R by a height H and extends transversely with respect to the extent direction of the opening channel (8), of the two channel walls which delimit the opening channel (8) is configured with H ≤ (0.5 T₂), in particular with (0.2 T₂) ≤ H ≤ (0.4 T₂), and with a ≤ (0.2 L), in particular with a ≤ (0.1 L).

7. Tread-strip profile in accordance with the features of one of the preceding claims, the depression bottom (9) which delimits the tubular opening channel (8) radially to the inside is configured with an extent length L between the two opening positions into the adjoining grooves (3, 4, 5), the depression bottom being configured, at least in the region of one opening, in particular of both openings, with an extent section of extent length a starting from the opening position, which extent section is free from linear elevations, where a ≤ (0.2 L), in particular a ≤ (0.1 L).

8. Tread-strip profile in accordance with the features of one of the preceding claims, having an extent height T₂ of the radially inner extent section which is configured with T₂ > B.

9. Tread-strip profile in accordance with the features of one of the preceding claims, having an extent height T₂ of the radially inner extent section and having an extent height T₁ of the radially outer extent section which is configured with (2 T₁) ≥ T₂ > T₁.

10. Tread-strip profile in accordance with the features of one of the preceding claims, in which the opening width B of the opening channel (8) is configured with 2 mm ≤ B ≤ 20 mm.

11. Tread-strip profile in accordance with the features of Claim 10, in which the tread-strip profile is a tread-strip profile of a passenger-car tyre and the opening width B of the opening channel is configured with 2 mm ≤ B ≤ 6 mm.

12. Tread-strip profile in accordance with the features of Claim 10, in which the tread-strip profile is a tread-strip profile of a commercial-vehicle tyre and the opening width B of the opening channel is configured with 6 mm ≤ B ≤ 20 mm.

## Revendications

1. Profil de bande de roulement d'un bandage pneumatique de véhicule comprenant des éléments profilés (1, 2) rehaussés radialement, espacés les uns des autres par des gorges (3, 4, 5), avec des renfoncements étroits (6) en forme de lignes ou de rainures dans les éléments profilés (1, 2), qui s'étendent à chaque fois à travers l'élément profilé respectif (1, 2) et qui débouchent dans des gorges (3, 4, 5) limitant l'élément profilé (1, 2),
un ou plusieurs renfoncements étroits (6) en forme de lignes ou de rainures étant réalisés dans le bandage dans la direction radiale R avec une portion d'étendue radialement interne d'une hauteur d'étendue T₂ et une région d'étendue radialement externe d'une hauteur d'étendue T₁, la portion d'étendue radialement interne s'étendant dans la direction radiale R depuis le point le plus bas de la base du renfoncement (9) jusqu'à la région d'étendue radialement externe et la région d'étendue radialement externe s'étendant depuis la région d'étendue radialement interne jusqu'à la surface (11) limitant radialement à l'extérieur l'élément profilé (1, 2) et formant la surface de contact avec le sol (11), et le renfoncement en forme de rainure (6) étant réalisé dans la région d'étendue radialement externe sous forme de fine entaille (7) avec une largeur de coupe D et dans la région d'étendue radialement interne sous forme de canal d'ouverture tubulaire (8) avec une largeur d'ouverture maximale B, avec B ≥ (2D), **caractérisé en ce**
**qu'**un ou plusieurs rehaussement(s) radial (radiaux) (10) de forme linéaire - notamment parallèle(s) - est ou sont réalisés au niveau de la base de renfoncement (9) limitant radialement vers l'intérieur le canal d'ouverture tubulaire (8).

2. Profil de bande de roulement selon les caractéristiques de la revendication 1,
dans lequel le ou les rehaussement (s) (10) de forme linéaire - notamment rectiligne(s) - est ou sont réalisés de manière à s'étendre parallèlement à l'allure du canal d'ouverture (8).

3. Profil de bande de roulement selon les caractéristiques de la revendication 1,
dans lequel le ou les rehaussement(s) (10) de forme linéaire - notamment rectiligne(s) - est ou sont réalisés de manière à s'étendre obliquement en formant un angle de coupe supérieur à zéro degré avec l'allure du canal d'ouverture.

4. Profil de bande de roulement selon les caractéristiques de la revendication 1,
dans lequel le ou les rehaussement(s) (10) de forme linéaire - notamment rectiligne(s) - est ou sont réalisés de manière à s'étendre parallèlement à l'allure de la fine entaille (7) dans la surface (11) limitant radialement vers l'extérieur l'élément profilé (1, 2).

5. Profil de bande de roulement selon les caractéristiques de la revendication 1,
dans lequel le ou les rehaussement(s) (10) de forme linéaire - notamment rectiligne(s) - est ou sont réalisés de manière à s'étendre obliquement en formant un angle de coupe α supérieur à zéro degré avec l'allure de la fine entaille (7) dans la surface (11) limitant radialement vers l'extérieur l'élément profilé (1, 2).

6. Profil de bande de roulement selon les caractéristiques de l'une quelconque des revendications précédentes,
dans lequel la base de renfoncement (9) limitant radialement vers l'intérieur le canal d'ouverture tubulaire (8) entre les deux positions d'embouchure dans les gorges de limitation (3, 4, 5) est réalisée avec une longueur d'étendue L, le canal d'ouverture (8) étant réalisé au moins dans la région d'une embouchure - notamment des deux embouchures - à partir de la position d'embouchure avec une portion d'étendue de longueur d'étendue a, dans laquelle est réalisée une liaison (12) des deux parois de canal limitant le canal d'ouverture (8), laquelle liaison s'étend transversalement à la direction d'étendue du canal d'ouverture (8), et est réalisée en forme de nervure rehaussée dans la direction radiale R depuis la base de renfoncement d'une hauteur H, avec H ≤ (0,5 T₂) - en particulier avec (0,2 T₂) ≤ H ≤ (0,4 T₂) et avec a ≤ (0,2 L) - en particulier a ≤ (0,1 L).

7. Profil de bande de roulement selon les caractéristiques de l'une quelconque des revendications précédentes,
dans lequel la base de renfoncement (9) limitant radialement vers l'intérieur le canal d'ouverture tubulaire (8) est réalisée entre les deux positions d'embouchure dans les gorges de limitation (3, 4, 5) avec une longueur d'étendue L, au moins dans la région d'une embouchure - en particulier des deux embouchures - à partir de la position d'embouchure, la base de renfoncement étant réalisée avec une portion d'étendue de longueur d'étendue a, qui est exempte de rehaussements de forme linéaire, avec a ≤ (0,2 L), notamment a ≤ (0,1 L).

8. Profil de bande de roulement selon les caractéristiques de l'une quelconque des revendications précédentes,
comprenant une hauteur d'étendue T₂ de la portion d'étendue radialement interne, qui est réalisée avec T₂ > B.

9. Profil de bande de roulement selon les caractéristiques de l'une quelconque des revendications précédentes,
comprenant une hauteur d'étendue T₂ de la portion d'étendue radialement interne et une hauteur d'étendue T₁ de la portion d'étendue radialement externe, qui est réalisée avec (2T₁) ≥ T₂ > T₁.

10. Profil de bande de roulement selon les caractéristiques de l'une quelconque des revendications précédentes,
dans lequel la largeur d'ouverture B du canal d'ouverture (8) est réalisée avec 2 mm ≤ B ≤ 20 mm.

11. Profil de bande de roulement selon les caractéristiques de la revendication 10,
dans lequel le profil de bande de roulement est un profil de bande de roulement d'un bandage de véhicule de tourisme et la largeur d'ouverture B du canal d'ouverture est réalisée avec 2 mm ≤ B ≤ 6 mm.

12. Profil de bande de roulement selon les caractéristiques de la revendication 10,
dans lequel le profil de bande de roulement est un profil de bande de roulement d'un bandage de véhicule utilitaire et la largeur d'ouverture B du canal d'ouverture est réalisée avec 6 mm ≤ B ≤ 20 mm.
